# EUROPÄISCHE PATENTSCHRIFT

(11) **EP 3 595 144 B1**
(45) Veröffentlichungstag und Bekanntmachung des Hinweises auf die Patenterteilung: **15.10.2025**
(21) Anmeldenummer: 19185553.5
(22) Anmeldetag: 10.07.2019
(51) Int. Cl.: H02K 9/04, H02K 9/06, H02K 9/08, F04D 29/38, F04D 25/06

(54) **TRAKTIONSVORRICHTUNG MIT INTEGRIERTEM LÜFTER**
TRACTION DEVICE WITH INTEGRATED FAN
UNITÉ DE TRACTION À VENTILATEUR INTÉGRÉ

(30) Priorität: 11.07.2018 DE 102018116786
(43) Veröffentlichungstag der Anmeldung: 15.01.2020
(73) Patentinhaber: ALSTOM Holdings, 93400 Saint-Ouen-sur-Seine (FR)
(72) Erfinder: Krischer, Hans, 14055 Berlin (DE); Nassen, Tobias, 72482 Västeras (SE)
(74) Vertreter: Zimmermann & Partner Patentanwälte mbB

(56) Entgegenhaltungen:
- EP-A1- 0 086 844
- EP-A1- 2 149 712
- DE-A1- 10 039 622
- DE-B- 1 134 453
- JP-A- 2008 005 606
- US-A- 2 613 240

## Beschreibung

### TECHNISCHES GEBIET

Die vorliegende Erfindung betrifft ein Schienenfahrzeug mit einer Traktionsvorrichtung mit integriertem Lüfter.

### VORBEKANNTER STAND DER TECHNIK

Traktionsvorrichtungen, beispielsweise zur Verwendung in Schienenfahrzeugen, werden zurzeit überwiegend mit Elektromotoren, insbesondere Asynchronmotoren, betrieben. Infolge elektrischer Widerstände und Reibung erzeugen Stator und Rotor eines Elektromotors thermische Energie bzw. Wärme.

Zur Motorkühlung ist üblicherweise eine Eigenbelüftung vorgesehen, bei der ein Lüfter am Rotor oder an der Rotorwelle des Traktionsmotors befestigt ist und damit Kühlluft zum Abführen der Wärme bereitstellt. Der Lüfter dreht sich dabei mit derselben Geschwindigkeit und in dieselbe Richtung wie der Rotor, der mit der jeweiligen Drehzahl des Elektromotors angetrieben wird.

Ferner wurden bereits Anordnungen für Motoren vorgeschlagen, die zusätzlich zum eigentlichen Motor einen Lüfterantrieb aufweisen. Beispielsweise beschreibt die DE 1134 453 solch einen Lüfterantrieb für Gleichstrommaschinen durch eine kollektorlose Drehfeldmaschine, die über die zu belüftende Maschine gespeist ist.

Die DE 259034 und die DE 32 40 058 A1 offenbaren jeweils eine Einrichtung zum Kühlen elektrischer Maschinen, bei der ein Ventilator mit einem Vielfachen der Drehzahl der zu kühlenden Maschine laufen kann.

Die oben zitierten Anordnungen beschränken sich insbesondere auf niedrige Drehzahlbereiche und sind daher für Schienenfahrzeuge, die in der Regel mit hohen Drehzahlen betrieben werden, nur bedingt nutzbar.

Bei der Fremdbelüftung von Traktionsvorrichtungen ist üblicherweise ein separater Traktionsmotorlüfter vorgesehen, der zum Beispiel auf dem Dach (z.B. bei Niederflurfahrzeugen) oder im Unterflurbereich (z.B. bei Hochflurfahrzeugen) angebracht ist. Durch Luftkanäle durch den Fahrzeuginnenraum wird der Luftstrom vom Traktionsmotorlüfter zum Motor transportiert.

In der US 2 613 240 wird zur Fremdbelüftung eines Elektromotors ein separater, relativ kleiner Kühlungsmotor im gleichen Gehäuse wie der Elektromotor vorgeschlagen, wobei der Kühlungsmotor unabhängig von der Geschwindigkeit des Elektromotors die Lüfterblätter in konstanter Geschwindigkeit rotieren lässt.

Die EP 1 109 297 A2 beschreibt einen fremdbelüfteten Traktionsmotor mit gegenüber der Traktionsmotorwelle frei drehbar gelagertem Lüfterrad, das mit einem elektrischen Lüftermotor angetrieben wird. EP 2 149 712 A1 offenbart einen bidirektionalen Radiallüfter für den Traktionsmotor eines Schienenfahrzeugs.

### NACHTEILE DES STANDES DER TECHNIK

Traktionsvorrichtungen arbeiten unter sich regelmäßig verändernden Beladungs- und Geschwindigkeitsbedingungen und müssen hohe Zug- und Bremskraftanforderungen erfüllen, sodass die übliche Eigenbelüftung, bei der der Lüfter am Rotor des Traktionsmotors befestigt ist, unzureichend ist. Insbesondere wenn der Rotor mit einer Drehzahl arbeitet, bei der die Luftzirkulation durch den Lüfter nicht für ausreichende Kühlung sorgt, droht eine Überhitzung des Motors. Daher sind eigenbelüftete Motoren insbesondere im unteren Geschwindigkeitsbereich in ihrer thermischen Dauerleistung begrenzt.

Bei Motoren mit hoher Drehzahl wird der Geräuschpegel bei den bisher bekannten Ausführungen der Eigenbelüftung in der Regel vom Lüfter bestimmt. Da die Durchlüftung des Traktionsmotors in Abhängigkeit der Drehzahl des Traktionsmotors erfolgt, ist der Drehzahl des Traktionsmotors daher eine obere Grenze gesetzt, um übermäßige Geräuschemissionen zu vermeiden.

Diese Begrenzung der Drehzahl des Traktionsmotors schränkt die Leistung des Traktionsmotors ein. Diese Leistungseinschränkung kann zwar mit einer Erhöhung des Motordurchmessers und somit einem größeren Drehmoment ausgeglichen werden, allerdings steigt damit wiederum der Platzbedarf und auch das Gewicht des Motors.

Zudem ist die Drehrichtung von Traktionsmotoren üblicherweise nicht festgelegt. Da der Lüfter bei einer Anordnung auf dem Rotor des Traktionsmotors stets die gleiche Drehzahl und Drehrichtung wie der Traktionsmotor aufweist, muss der Lüfter stets für beide Drehrichtungen ausgelegt sein.

Allerdings ist die Eigenbelüftung häufig günstiger und platzsparender als die übliche Fremdbelüftung, da nicht separat ein Traktionsmotorlüfter und Luftkanäle im Fahrzeug untergebracht werden müssen.

### PROBLEMSTELLUNG

Aufgabe der vorliegenden Erfindung ist es daher, eine verbesserte Traktionsvorrichtung mit integriertem Lüfter bereitzustellen, die die Leistung und den geringeren Geräuschpegel eines fremdbelüfteten Motors mit dem geringeren Platzbedarf eines eigenbelüfteten Motors kombiniert und damit insbesondere die oben beschriebenen Nachteile reduziert.

### ERFINDUNGSGEMÄßE LÖSUNG

Die obige Aufgabe wird durch die Merkmale in Anspruch 1 gelöst. Vorteilhafte Ausführungsformen ergeben sich aus den abhängigen Unteransprüchen.

Erfindungsgemäß wird eine Traktionsvorrichtung, insbesondere für Schienenfahrzeuge, bereitgestellt, die einen Traktionsmotor mit einer Motorwelle, einem drehfest mit der Motorwelle verbundenen Traktionsmotor-Rotor, und einem die Motorwelle und den Traktionsmotor-Rotor umgebenden Traktionsmotor-Stator aufweist. Weiterhin weist die Traktionsvorrichtung einen Lüfter zum Belüften des Traktionsmotors auf, der einen ringförmigen Lüfter-Rotor, der mindestens zwei radial nach innen verlaufende Lüfterblätter aufweist und gegenüber der Motorwelle frei drehbar gelagert ist, und einen den Lüfter-Rotor umgebenden Lüfter-Stator umfasst.

Der Lüfter drückt oder saugt, typischerweise in axialer Richtung, Umgebungsluft durch den Traktionsmotor und sorgt dadurch für Kühlluft zum Abführen der im Traktionsmotor erzeugten Wärme. Da der Lüfter-Rotor des Lüfters frei drehbar um die Welle gelagert ist, muss weder die Drehrichtung noch die Umdrehungsgeschwindigkeit des Lüfters der Drehrichtung oder der Umdrehungsgeschwindigkeit des Traktionsmotors entsprechen.

Insbesondere wird eine Durchlüftung des Traktionsmotors erreicht, die unabhängig von dessen Drehzahl ist, sodass insbesondere eine Überhitzung bei niedrigen Drehzahlen und ein hoher Geräuschpegel bei hohen Drehzahlen vermieden werden.

Der Traktionsmotor, beispielsweise ein Asynchronmotor, kann demzufolge mit hohen Drehzahlen betrieben werden, sodass das Drehmoment des Motors und damit sein Gewicht niedrig gehalten werden können. Die erfindungsgemäße Traktionsvorrichtung ist damit nicht nur platzsparender als ein übliches Fremdbelüftungssystem mit Traktionsmotorlüfter und Luftkanälen, sondern kann auch mit einem geringeren Durchmesser als ein vergleichbarer eigenbelüfteter Motor realisiert werden.

Gemäß einer vorteilhaften Ausgestaltung der Erfindung sind mindestens zwei, insbesondere aber mehrere Permanentmagnete, beispielsweise mindestens drei oder mindestens vier, entlang des ringförmigen Lüfter-Rotors verteilt angeordnet. Der ringförmige Lüfter-Rotor kann dabei eine geschlossene Form aufweisen aber auch aus teilringförmigen Segmenten gebildet sein, die jeweils mit mindestens einem der mindesten zwei Lüfterblätter verbunden sind.

Der ringförmige Lüfter-Rotor ist gemäß einer Ausführungsform über die mindestens zwei Lüfterblätter mit einem auf der Motorwelle angeordneten Drehlager verbunden und kann sich relativ zur Motorwelle, um diese drehen. Bei einer Ausführungsform, bei der der Lüfter-Rotor sowie das Drehlager in axialer Erstreckung der Motorwelle nicht breiter als die mindestens zwei Lüfterblätter sind, kann die erfindungsgemäße fremdbelüftete Traktionsvorrichtung im Bauraum eines eigenbelüfteten Motors realisiert werden. Um den zur Abkühlung nötigen Luftstrom erzeugen zu können, kann es vorteilhaft sein, wenn der Lüfter-Rotor eine größere radiale Ausdehnung als der Traktionsmotor bzw. der mit der Motorwelle drehfest verbundener Traktionsmotor-Rotor hat.

Gemäß einer Ausführungsform verfügen der Traktionsmotor-Stator und der Lüfter-Stator jeweils über separate elektrische Anschlüsse, sodass eine Umdrehungsgeschwindigkeit und/oder Drehrichtung des Lüfter-Rotors unabhängig von einer Umdrehungsgeschwindigkeit und/oder Drehrichtung der Motorwelle des Traktionsmotors realisiert werden kann.

Die mindestens zwei Lüfterblätter, die zum Zentrum des ringförmigen Lüfter-Rotors gerichtet sind, können gemäß einer Ausführungsform für eine uni-direktionale Drehrichtung ausgelegt sein und gemäß einer anderen Ausführungsform für eine bi-direktionale Drehrichtung ausgelegt sein. Bei einer bi-direktionalen Drehrichtung ist es möglich, die Drehrichtung des Lüfter-Rotors an die Drehrichtung des Traktionsmotor-Rotors anzupassen und damit die relative Drehgeschwindigkeit des Lüfter-Rotors gegenüber der Motorwelle (8) zu begrenzen, wodurch die Beanspruchung des Lüfter-Drehlagers verringert werden kann.

Gemäß einer vorteilhaften Ausgestaltung der Erfindung sind der Lüfter-Stator und der Traktionsmotor-Stator relativ zu einem Gehäuse koaxial festgelegt. Der Lüfter kann dementsprechend an einer ersten Stirnseite des Traktionsmotors angeordnet sein. Zusätzlich kann gemäß einer anderen Ausführungsform auch ein zweiter Lüfter an einer zweiten Stirnseite angeordnet sein, die der ersten Stirnseite gegenüberliegt.

Das Gehäuse kann gemäß einer Ausführungsform über Lüftungsöffnungen, insbesondere axiale Lüftungsöffnungen, zum Durchströmen von Luft verfügen sowie über jeweils mindestens ein Drehlager zum Lagern der Motorwelle an jeder Stirnseite.

Gemäß einer weiteren Ausführung wird ein Schienenfahrzeug offenbart, umfassend eine Traktionsvorrichtung gemäß einer oder mehreren der oben beschriebenen Ausführungen.

Die vorstehend beschriebenen Ausführungsformen können beliebig miteinander kombiniert werden.

### KURZBESCHREIBUNG DER FIGUREN

Die beiliegenden Zeichnungen veranschaulichen eine Ausführungsform und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
Fig. 1 zeigt eine Seitenansicht einer erfindungsgemäßen Traktionsvorrichtung, und
Fig. 2 zeigt eine Frontalansicht des ringförmigen Lüfter-Rotors.

### AUSFÜHRUNGSBEISPIEL

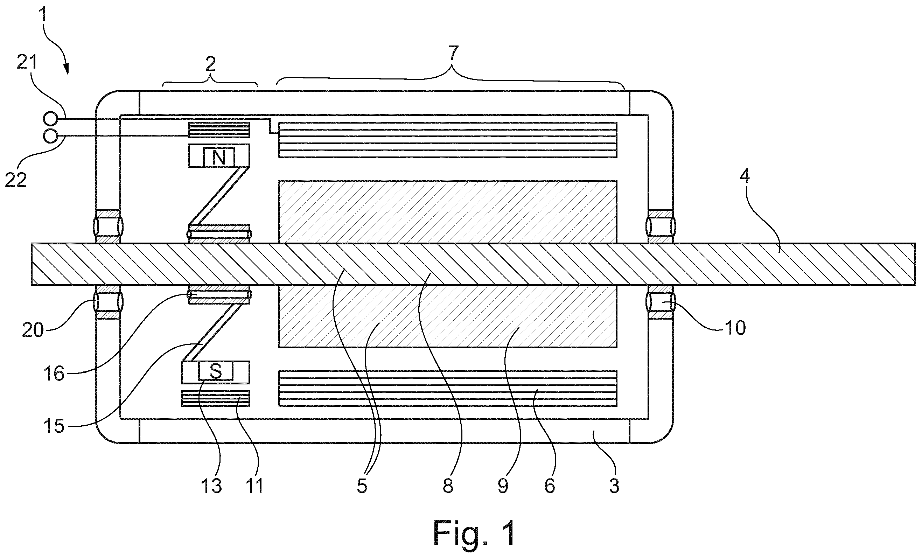

Fig. 1 zeigt eine Seitenansicht einer erfindungsgemäßen Traktionsvorrichtung 1 mit einem integrierten Lüfter 2 im Querschnitt.

Neben einem Gehäuse 3 sind eine Antriebseite 4, ein Traktionsmotor-Rotor 5 und ein Traktionsmotor-Stator 6 eines an sich bekannten Traktionsmotors 7 schematisch dargestellt.

Der Traktionsmotor-Stator 6 samt Statorwicklung ist am Gehäuse 3 festgelegt. Der Traktionsmotor-Rotor 5, welcher eine Motorwelle 8 und eine Rotorwicklung 10 aufweist, ist über die Motorwelle 8 an jeder Stirnseite des Gehäuses 3 über jeweils ein Drehlager 10, 20 gelagert.

Zur Kühlung des Traktionsmotors ist ein Lüfter 2 im Gehäuse 3 integriert, der mit Hilfe eines Lüfter-Stators 11 und eines Lüfter-Rotors 13 angetrieben wird.

Der Lüfter-Stator 11 samt Statorwicklung ist axial beabstandet zum Traktionsmotor-Stator 4 ebenfalls relativ zum Gehäuse 3 festgelegt. Die Wickelköpfe des Traktionsmotor-Stators 4 und des Lüfter-Stators 7 sind dabei vorzugsweise voneinander abgewandt, damit die bei Stromfluss jeweilig wirkenden Magnetfelder sich möglichst wenig beeinflussen.

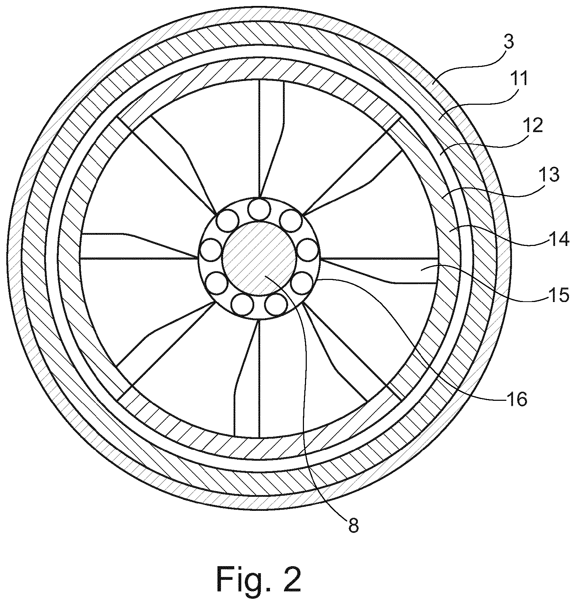

Der Lüfter-Stator 11 umgibt den Lüfter-Rotor 13 und ist ihm gegenüber mit einem geringen Radialspalt 12 angeordnet. Der Lüfter-Rotor 13 wird als Ring mit integrierten Permanentmagneten 14 ausgeführt und umgibt die Motorwelle 8 in konzentrischer Weise. Eine Frontalansicht des ringförmigen Lüfter-Rotors 13 ist in Fig. 2 dargestellt.

Am Lüfter-Rotor 13 sind eine Vielzahl von Lüfterblättern 15 festgelegt, die sich zu einem Lüfter-Drehlager 16 erstrecken, das an der Motorwelle 8 im Zentrum des ringförmigen Lüfter-Rotors 13 angebracht ist.

Dieser Aufbau ermöglicht es, dass sich der Lüfter-Rotor 13 unabhängig von der Drehzahl der Motorwelle 8 drehen kann. Die zur Motorwelle 8 drehzahlvariable Lagerung ermöglicht es, die Drehzahl des Lüfters 2 unabhängig vor der Drehzahl des Traktionsmotors 7 durch Anlegen einer frequenzvariablen Spannung zu regeln, wobei die externe Spannungsversorgung des Lüfters 2 und des Traktionsmotors 7 nicht dargestellt ist. Zu diesem Zweck ist der Lüfter-Rotor 13 mit einem elektrischen Anschluss 22 verbunden, der unabhängig zu einem elektrischen Anschluss 21 des Traktionsmotor-Rotors 6 ist.

Der Lüfter kann somit bei niedrigen Drehzahlen des Elektromotors 7 selbst mit einer höheren Drehzahl betrieben werden und damit genug Kühlluft zum Abführen der im Elektromotor entstehenden Wärme bereitstellen, um eine Überhitzung des Elektromotors zu verhindern. Die Lüfterblätter 15 können zudem auf eine Drehrichtung optimiert werden, sodass auch der damit einhergehende Luftstrom optimiert wird. Damit kann sowohl die Leistung des Lüfters 2 gesteigert werden als auch die Geräuschemission des Lüfters 2 gesenkt werden.

Um die Differenz der Drehzahlen der Motorwelle 8 und des Lüfter-Rotors 13 gering zu halten und damit die Lebensdauer des Lüfter-Drehlagers 16 zu verlängern, kann allerdings auch eine Auslegung auf beide Drehrichtungen gewählt werden.

Der Lüfter kann allgemein bei hohen Drehzahlen des Elektromotors 7 selbst mit einer niedrigeren Drehzahl betrieben werden, um starke Geräuschpegel zu vermeiden.

Wenn der ringförmige Lüfter-Rotor 13 mit den integrierten Magneten und das Lüfter-Drehlager 16 an der Motorwelle 8 in axialer Richtung nicht breiter sind als ein vergleichbares Gebläse eines eigenbelüfteten Motors, benötigt die erfindungsgemäße Traktionsvorrichtung keinen zusätzlichen Platz und kann im Bauraum eines eigenbelüfteten Motors untergebracht werden.

### Bezugszeichenliste

- 1: Traktionsvorrichtung
- 2: Lüfter
- 3: Gehäuse
- 4: Antriebseite
- 5: Traktionsmotor-Rotor
- 6: Traktionsmotor-Stator mit Statorwicklung
- 7: Elektromotor
- 8: Motorwelle
- 9: Rotorwicklung
- 10: Lüfter-Drehlager
- 11: Lüfter-Stator mit Statorwicklung
- 12: Radialspalt
- 13: Lüfter-Rotor mit integrierten Permanentmagneten
- 14: Permanentmagnet
- 15: Lüfterblatt
- 16: Drehlager
- 20: Drehlager
- 21: Anschluss für Traktionsmotor-Rotor
- 22: Anschluss für Lüfter-Rotor

## Patentansprüche

1. Schienenfahrzeug mit mindestens einer Traktionsvorrichtung, die Traktionsvorrichtung aufweisend:
einen Traktionsmotor (7) mit einer Motorwelle (8), einem drehfest mit der Motorwelle (8) verbundenen Traktionsmotor-Rotor (5), und einem die Motorwelle (8) und den Traktionsmotor-Rotor (5) umgebenden Traktionsmotor-Stator (6), und
einen Lüfter (2) zum Belüften des Traktionsmotors, aufweisend einen ringförmigen Lüfter-Rotor (13), der mindestens zwei radial nach innen verlaufenden Lüfterblätter (15) aufweist und gegenüber der Motorwelle (8) frei drehbar gelagert ist, und einen den Lüfter-Rotor (13) umgebenden Lüfter-Stator (11), wobei die mindestens zwei Lüfterblätter (15) mit einem auf der Motorwelle (8) angeordneten Lüfter-Drehlager (16) mit der Motorwelle (8) verbunden sind.

2. Schienenfahrzeug nach Anspruch 1, wobei der Lüfter-Rotor (13) mindestens zwei, insbesondere mehrere Permanentmagnete (14) aufweist, die entlang des ringförmigen Lüfter-Rotors (13) verteilt angeordnet sind.

3. Schienenfahrzeug nach Anspruch 1 bis 2, wobei der Traktionsmotor-Stator (6) und der Lüfter-Stator (11) jeweils separate elektrische Anschlüsse (21, 22) aufweisen, um eine Umdrehungsgeschwindigkeit und/oder Drehrichtung des Lüfter-Rotors (13) unabhängig von einer Umdrehungsgeschwindigkeit und/oder Drehrichtung der Motorwelle des Traktionsmotors (5) einzustellen.

4. Schienenfahrzeug nach einem der Ansprüche 1 bis 3, wobei die mindestens zwei Lüfterblätter (15) für eine uni-direktionale Drehrichtung ausgelegt sind.

5. Schienenfahrzeug nach einem der Ansprüche 1 bis 3, wobei die mindestens zwei Lüfterblätter (15) für eine bi-direktionale Drehrichtung ausgelegt sind.

6. Schienenfahrzeug nach einem der Ansprüche 1 bis 5, aufweisend ein Gehäuse (3), wobei der Lüfter-Stator (11) und der Traktionsmotor-Stator (6) im und relativ zum Gehäuse (3) festgelegt sind, insbesondere, dass der Lüfter-Stator (11) unabhängig vom Traktionsmotor-Stator (6) und insbesondere axial beabstandet zu diesem am Gehäuse (3) festgelegt ist.

7. Schienenfahrzeug nach Anspruch 6, wobei das Gehäuse (3) Lüftungsöffnungen, insbesondere axiale Lüftungsöffnungen, zum Durchströmen von Luft aufweist.

8. Schienenfahrzeug nach Anspruch 6 oder 7, wobei das Gehäuse (3) an seinen Stirnseiten jeweils mindestens ein Drehlager (10, 20) zum Lagern der Motorwelle (8) aufweist.

9. Schienenfahrzeug nach einem der vorherigen Ansprüche, wobei der Lüfter-Rotor (13) sowie das Lüfter-Drehlager (16), in axialer Erstreckung der Motorwelle (8), nicht breiter als die mindestens zwei Lüfterblätter (15) sind.

10. Schienenfahrzeug nach einem der vorherigen Ansprüche, wobei der Lüfter-Rotor (13) des Lüfters (2) aus teilringförmigen Segmenten gebildet ist, die jeweils mit mindestens einem der mindesten zwei Lüfterblätter (15) verbunden sind.

11. Schienenfahrzeug nach einem der vorherigen Ansprüche, wobei es sich bei dem Traktionsmotor (7) um einen Asynchronmotor handelt.

12. Schienenfahrzeug nach einem der vorherigen Ansprüche, wobei der Lüfter (2) an einer ersten Stirnseite des Traktionsmotors (7) angeordnet ist.

13. Schienenfahrzeug nach Anspruch 12, weiter aufweisend einen zweiten Lüfter der an einer der ersten Stirnseite gegenüberliegenden zweiten Stirnseite des Traktionsmotors (7) angeordnet ist.

## Claims

1. A rail vehicle including at least one traction device, the traction device comprising:
a traction motor (7) including a motor shaft (8), a traction motor rotor (5) connected in a rotationally fixed manner to the motor shaft (8), and a traction motor stator (6) surrounding the motor shaft (8) and the traction motor rotor (5), and
a fan (2) for ventilating the traction motor, comprising an annular fan rotor (13) which comprises at least two fan blades (15) extending radially inwards and is freely rotatably mounted relative to the motor shaft (8), and a fan stator (11) surrounding the fan rotor (13), wherein the at least two fan blades (15) are connected to the motor shaft (8) via a fan pivot bearing (16) arranged on the motor shaft (8).

2. The rail vehicle according to claim 1, wherein the fan rotor (13) comprises at least two, in particular a plurality of permanent magnets (14) distributed along the annular fan rotor (13).

3. The rail vehicle according to claim 1 or 2, wherein the traction motor stator (6) and the fan stator (11) each comprise separate electrical connections (21, 22) in order to set a rotational speed and/or direction of rotation of the fan rotor (13) independently of a rotational speed and/or direction of rotation of the motor shaft of the traction motor (5).

4. The rail vehicle according to any one of claims 1 to 3, wherein the at least two fan blades (15) are configured for a unidirectional direction of rotation.

5. The rail vehicle according to any one of claims 1 to 3, wherein the at least two fan blades (15) are configured for a bidirectional direction of rotation.

6. The rail vehicle according to any one of claims 1 to 5, comprising a housing (3), wherein the fan stator (11) and the traction motor stator (6) are fixed in and relative to the housing (3), in particular that the fan stator (11) is fixed to the housing (3) independently of the traction motor stator (6) and, in particular, axially spaced therefrom.

7. The rail vehicle according to claim 6, wherein the housing (3) comprises ventilation openings, in particular axial ventilation openings, for air to flow through.

8. The rail vehicle according to claim 6 or 7, wherein the housing (3) comprises at least one pivot bearing (10, 20) on each of its end faces for supporting the motor shaft (8).

9. The rail vehicle according to any one of the preceding claims, wherein the fan rotor (13) and the fan pivot bearing (16) are not wider than the at least two fan blades (15) in the axial extension of the motor shaft (8).

10. The rail vehicle according to any one of the preceding claims, wherein the fan rotor (13) of the fan (2) is formed from partially annular segments, each of which is connected to at least one of the at least two fan blades (15).

11. The rail vehicle according to any one of the preceding claims, wherein the traction motor (7) is an asynchronous motor.

12. The rail vehicle according to any one of the preceding claims, wherein the fan (2) is arranged on a first end face of the traction motor (7).

13. The rail vehicle according to claim 12, further comprising a second fan arranged on a second end face of the traction motor (7) opposite the first end face.

## Revendications

1. Véhicule ferroviaire comportant au moins un dispositif de traction, le dispositif de traction présentant :
un moteur de traction (7) comportant un arbre de moteur (8), un rotor de moteur de traction (5) relié de manière solidaire en rotation à l'arbre de moteur (8), et un stator de moteur de traction (6) entourant l'arbre de moteur (8) et le rotor de moteur de traction (5), et
un ventilateur (2) pour la ventilation du moteur de traction, présentant un rotor de ventilateur (13) annulaire qui présente au moins deux pales de ventilateur (15) s'étendant radialement vers l'intérieur et qui est monté de manière à pouvoir tourner librement par rapport à l'arbre de moteur (8), et un stator de ventilateur (11) entourant le rotor de ventilateur (13), dans lequel les au moins deux pales de ventilateur (15) sont reliées à l'arbre de moteur (8) par un palier tournant de ventilateur (16) disposé sur l'arbre de moteur (8).

2. Véhicule ferroviaire selon la revendication 1, dans lequel le rotor de ventilateur (13) présente au moins deux, en particulier plusieurs, aimants permanents (14) qui sont disposés de manière à être répartis le long du rotor de ventilateur (13) annulaire.

3. Véhicule ferroviaire selon les revendications 1 à 2, dans lequel le stator de moteur de traction (6) et le stator de ventilateur (11) présentent respectivement des connexions électriques (21, 22) séparées pour régler une vitesse de rotation et/ou un sens de rotation du rotor de ventilateur (13) indépendamment d'une vitesse de rotation et/ou d'un sens de rotation de l'arbre de moteur du moteur de traction (5).

4. Véhicule ferroviaire selon l'une des revendications 1 à 3, dans lequel les au moins deux pales de ventilateur (15) sont conçues pour un sens de rotation unidirectionnel.

5. Véhicule ferroviaire selon l'une des revendications 1 à 3, dans lequel les au moins deux pales de ventilateur (15) sont conçues pour un sens de rotation bidirectionnel.

6. Véhicule ferroviaire selon l'une des revendications 1 à 5, présentant un carter (3), dans lequel le stator de ventilateur (11) et le stator de moteur de traction (6) sont fixés dans le carter (3) et par rapport à celui-ci, en particulier que le stator de ventilateur (11) est fixé au carter (3) indépendamment du stator de moteur de traction (6) et en particulier à une certaine distance axiale de celui-ci.

7. Véhicule ferroviaire selon la revendication 6, dans lequel le carter (3) présente des ouvertures d'aération, en particulier des ouvertures d'aération axiales, pour le passage de l'air.

8. Véhicule ferroviaire selon la revendication 6 ou 7, dans lequel le carter (3) présente sur ses faces frontales respectivement au moins un palier tournant (10, 20) pour le montage de l'arbre de moteur (8).

9. Véhicule ferroviaire selon l'une des revendications précédentes, dans lequel, dans la dimension axiale de l'arbre de moteur (8), le rotor de ventilateur (13) ainsi que le palier tournant de ventilateur (16) ne sont pas plus larges que les au moins deux pales de ventilateur (15).

10. Véhicule ferroviaire selon l'une des revendications précédentes, dans lequel le rotor de ventilateur (13) du ventilateur (2) est formé à partir de segments en forme d'anneau partiel qui sont respectivement reliés à au moins l'une des au moins deux pales de ventilateur (15).

11. Véhicule ferroviaire selon l'une des revendications précédentes, dans lequel le moteur de traction (7) est un moteur asynchrone.

12. Véhicule ferroviaire selon l'une des revendications précédentes, dans lequel le ventilateur (2) est disposé sur une première face frontale du moteur de traction (7).

13. Véhicule ferroviaire selon la revendication 12, présentant en outre un second ventilateur qui est disposé sur une seconde face frontale du moteur de traction (7) opposée à la première face frontale.
